# EUROPÄISCHE PATENTSCHRIFT

(11) **EP 0 471 877 B1**
(45) Veröffentlichungstag und Bekanntmachung des Hinweises auf die Patenterteilung: **26.10.1994**
(21) Anmeldenummer: 90116185.1
(22) Anmeldetag: 23.08.1990
(51) Int. Cl.: H04M 3/42, H04M 1/00

(54) **Digitale Fernsprecheinrichtung**
Digital telephone device
Installation téléphonique digitale

(43) Veröffentlichungstag der Anmeldung: 26.02.1992
(73) Patentinhaber: SIEMENS AKTIENGESELLSCHAFT, 80333 München (DE)
(72) Erfinder: Weinberger, Günter, Dipl.-Ing., D-8152 Feldkirchen (DE)

(56) Entgegenhaltungen:
- EP-A- 0 173 264
- EP-A- 0 350 836
- EP-A- 0 365 200
- DE-A- 3 721 984

## Beschreibung

Die Erfindung betrifft eine Fernsprecheinrichtung nach dem Oberbegriff des Patentanspruches 1.

Der Komfort bei Fernsprechendgeräten ist in den letzten Jahren deutlich gestiegen. Dadurch erhöht sich die Zahl der möglichen Funktionen und damit der Steuerfunktionen, die im wesentlichen lokal vom Fernsprechendgerät ausgeführt werden, erheblich. So werden beispielsweise für die Tastaturabfrage, die Anzeigensteuerung, den Weckruf, die Lautstärkeeinstellung, die Überwachung der Speisespannung und des Gabelkontakts, die Speicherung von Nummern sowie die Kommunikation mit der Vermittlung, insbesondere der Übermittlung der Wählzustände, Steuerfunktionen ausgeführt, welche meist relativ komplexe Abläufe nach sich ziehen. Die lokalen Steuerfunktionen im Fernsprechendgerät werden deshalb heute überwiegend mit Hilfe von Mikrocomputern bzw. Microprozessoren in Verbindung mit entsprechenden flüchtigen und nichtflüchtigen Speichern realisiert, wobei in geringem Umfang auch verhältnismäßig komplexe Logikbausteine (ASICs) Verwendung finden (Siehe z.B. EP-A-0 365 200). Der Aufwand zur Realisierung der lokalen Steuerfunktionen ist dabei also sehr hoch.

Aufgabe der Erfindung ist es daher, eine Fernsprecheinrichtung anzugeben, bei der der Aufwand für die lokalen Steuerfunktionen geringer ist.

Diese Aufgabe wird bei einer gattungsgemäßen Fernsprecheinrichtung durch die kennzeichnenden Merkmale des Patentanspruches 1 gelöst. Ausgestaltungen und Weiterbildungen des Erfindungsgedankens sind in Unteransprüchen gekennzeichnet.

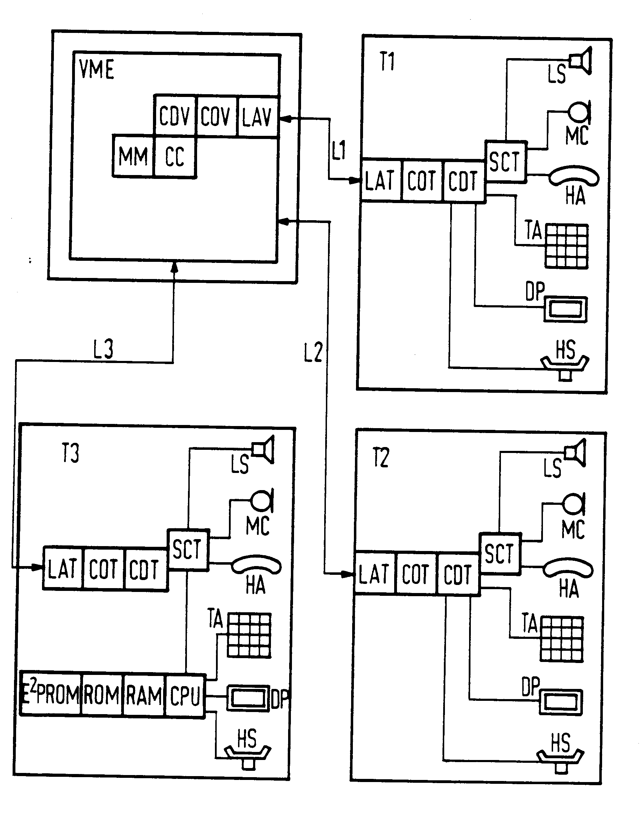

Die Erfindung wird nachfolgend anhand des in der einzigen FIG der Zeichnung dargestellten Ausführungsbeispiels näher erläutert.

Eine erfindungsgemäße Fernsprecheinrichtung besteht aus einer digitalen Vermittlungseinheit VME, an der beispielsweise über jeweils eine Leitung L1 bis L3 digitale Fernsprechendgeräte T1 bis T3 angeschlossen sind. Das digitale Fernsprechendgerät T1 besteht unter anderem aus einer Leitungsanpaßeinrichtung LAT, einer Korrekturschaltung COT zur Korrektur von Übertragungsfehlern, einer Codier- und Decodiereinrichtung CDT sowie einer Sprechschaltung SCT. Die Leitungsanpaßeinrichtung LAT ist zur Anpassung der auf der Leitung L1 und im digitalen Fernsprechendgerät T1 auftretenden Signalpegel und Leitungsabschlußimpedanzen. Die nachfolgende Fehlerkorrektureinrichtung COT ermittelt Übertragungsfehler und korrigiert diese weitgehenst. Mit der Fehlerkorrektureinrichtung COT ist die Codier- und Decodiereinrichtung CDT verbunden, welche wiederum mit einer Sprechschaltung SCT verschaltet ist und an der verschiedene periphere Einheiten angeschlossen sind. Derartige periphere Einheiten sind beispielsweise eine Tastatur TA zur Eingabe der zu wählenden Nummer und/oder zur Anforderung von bestimmten Funktionen, eine Anzeige DP - beispielsweise eine LCD-Anzeige - und ein Gabelkontakt HS. An die Sprechschaltung SC sind ein Handapparat HA, ein Lautsprecher LS und ein Mikrophon MC angeschlossen.

Entsprechend der Leitungsanpaßeinrichtung LAT, der Fehlerkorrektureinrichtung COT und der Codier- und Decodiereinrichtung CDT beim digitalen Fernsprechendgerät T1 sind bei der digitalen Vermittlungseinheit VME eine Leitungsanpaßeinrichtung LAV, eine Fehlerkorrektureinrichtung COV und eine Codier- und Decodiereinrichtung CDV der Leitung L1 zugeordnet. Diese sind ebenso wie die entsprechenden Einrichtungen beim digitalen Fernsprechendgerät T1 bidirektional ausgebildet, d. h. sie sind sowohl für den Sende- als auch Empfangsbetrieb vorgesehen. Darüber hinaus enthält die digitale Vermittlungseinheit VME eine zentrale Rechnereinheit CC und eine Speichereinheit MM. An die digitale Vermittlungseinheit VME sind des weiteren beispielsweise ein Fernsprechendgerät T2, das identisch wie das digitale Fernsprechendgerät T1 aufgebaut ist, und ein digitales Fernsprechendgerät T3, das in bekannter Weise aufgebaut ist, über jeweils eine Leitung L2 bzw. L3 angeschlossen. Im vorliegenden Ausführungsbeispiel weisen dabei alle digitalen Fernsprechendgeräte T1 bis T3 die gleichen Funktionsmöglichkeiten auf.

Das in bekannter Weise aufgebaute Fernsprechendgerät T3 enthält ebenso wie die beiden digitalen Fernsprechendgeräte T1 und T2 eine Leitungsanpaßeinrichtung LAT, eine Fehlerkorrekturschaltung COT, eine Codier- und Decodiereinrichtung CDT und eine Sprechschaltung SC. Zusätzlich sind jedoch eine lokale Prozessoreinheit CPU ein flüchtiger löschbarer Speicher RAM, ein nicht löschbarer, nichtflüchtiger Speicher ROM sowie ein löschbarer, nichtflüchtiger Speicher E²PROM vorgesehen. An die lokale Prozessoreinheit CPU sind eine Tastatur TA, eine Anzeige DP, ein Gabelkontakt HS und eine Sprechschaltung SC angeschlossen. An die Sprechschaltung SC sind wiederum ein Handapparat HA, ein Mikrophon MC und ein Lautsprecher LS angeschlossen.

Beim Betrieb des in bekannter Weise aufgebauten Fernsprechendgerätes T3 werden alle Funktionen durch die lokale Prozessoreinheit CPU gesteuert. Eine Kommunikation zwischen der lokalen Prozessoreinheit CPU und der zentralen Rechnereinheit CC der Vermittlungseinheit VME erfolgt nur, wenn dies für die Kommunikation zwischen der Vermittlungseinheit VME und dem digitalen Fernsprechendgerät T3 insgesamt erforderlich ist, wie beispielsweise bei der Übermittlung der Wählzustände und des Gabelkontakts. Andere Funktionen dagegen wie beispielsweise Nummernspeicherung, Lautstärkeeinstellung, Anzeigensteuerung und Einschalten einer Freisprechfunktion werden ausschließlich durch die lokale Prozessoreinheit CPU gesteuert.

Dagegen werden bei den Fernsprechendgeräten T1 und T2 erfindungsgemäß alle bei den unterschiedlichen Funktionen auftretenden Kontrollsignale direkt an die digitale Vermittlungseinheit VME übertragen. Umgekehrt werden nun alle Funktionen dieser Fernsprechendgeräte T1 und T2 durch die digitale Vermittlungseinheit VME über entsprechende Steuersignale direkt gesteuert. Die Steuersignale bzw. die Kontrollsignale werden ebenso wie Sprachsignale codiert und über die Leitung L1 bzw. L2 übertragen. Entscheidend dabei ist, daß das jeweilige Fernsprechendgerät auf einen Anreiz, beispielsweise nach dem Drücken einer bestimmten Taste der Tastatur TA, keine andere Funktion ausführt als genau diesen Anreiz als Kontrollsignal in die digitale Vermittlungseinheit VME zu senden und eine von der digitalen Vermittlungseinheit VME als Steuersignal empfangene Information nur genau einmal auszuwerten, d.h. keine Folgeaktivitäten daraus abgeleitet werden. Die einzigen Steuerfunktionen die bei Bedarf dem Fernsprechendgerät verbleiben, sind aktivieren bzw. deaktivieren der jeweiligen Leitung mit entsprechenden leistungssparenden Zuständen.

Dadurch verringert sich der schaltungstechnische Aufwand in den Fernsprechendgeräten erheblich. Vor allem können lokale Prozessoreinheiten und damit verbundene Speichereinheiten eingespart werden. Insbesondere aber kann dabei auf einen beispielsweise zur Nummernspeicherung benötigten löschbaren, nichtflüchtigen Speicher verzichtet werden. Stattdessen werden die Steuerung und die Speicherung alle Funktionen durch die zentrale Rechnereinheit der digitalen Vermittlungseinheit VME durchgeführt, wobei in den meisten Fällen bereits die notwendigen schaltungstechnischen Voraussetzungen erfüllt sind, so daß kein zusätzlicher schaltungstechnischer Aufwand bei der digitalen Vermittlungseinheit VME notwendig ist und Änderungen nur im Bereich der Software notwendig sind. Auch ist die Realisierung löschbarer nichtflüchtiger Speicher, bei der digitalen Vermittlungseinheit VME beispielsweise durch Pufferung von löschbaren flüchtigen Speichern, wesentlich günstiger. Der Aufwand bei den digitalen Fernsprechendgeräten verringert sich wesentlich.

## Patentansprüche

1. Fernsprecheinrichtung mit einer digitalen Vermittlungseinheit (VME) und mit an der digitalen Vermittlungseinheit (VME) angeschlossenen digitalen Fernsprechendgeräten (T1, T2, T3)
**gekennzeichnet durch**
mindestens ein digitales Fernsprechendgerät (T1, T2) mit mehreren Funktionen, bei dem alle im digitalen Fernsprechgerät (T1, T2) erzeugten Kontrollsignale direkt an die digitale Vermittlungseinheit (VME) weitergeleitet werden und bei dem alle Funktionen des digitalen Fernsprechendgerätes (T1, T2) durch die digitale Vermittlungseinheit (VME) über entsprechende Steuersignale direkt gesteuert werden.

2. Fernsprecheinrichtung nach Anspruch 1,
**gekennzeichnet durch**
Mittel (COT, COV) zur Korrektur von Übertragungsfehlern bei Kontroll- und Steuersignalen.

3. Fernsprecheinrichtung nach Anspruch 1 oder 2,
**gekennzeichnet durch**
Mittel (COT, COV) zur Codierung und Decodierung von Kontroll- und Steuersignalen.

## Claims

1. Telephone system having a digital switching unit (VME) and digital telephone sets (T1,T2,T3) connected to the digital switching unit (VME), characterized by at least one digital telephone set (T1, T2) with a plurality of functions, in which telephone set all control signals generated in the digital telephone set (T1, T2) are passed on directly to the digital switching unit (VME) and in which all functions of the digital telephone set (T1, T2) are directly driven by the digital switching unit (VME) by means of appropriate drive signals.

2. Telephone system according to Claim 1, characterized by means (COT, COV) for correcting transmission errors in control signals and drive signals.

3. Telephone system according to Claim 1 or 2, characterized by means (COT, COV) for encoding and decoding control signals and drive signals.

## Revendications

1. Installation téléphonique comportant une unité (VME) de commutation numérique et des terminaux téléphoniques numériques (T1,T2,T3) connectés à l'unité (VME) de commutation numérique, caractérisée par
au moins un terminal téléphonique numérique (T1,T2) comportant plusieurs fonctions et dans lequel tous les signaux de contrôle produits dans le terminal téléphonique numérique (T1,T2) sont transmis directement à l'unité (VME) de commutation numérique, et dans lequel toutes les fonctions du terminal téléphonique numérique (T1,T2) sont commandées directement par l'unité (VME) de commutation numérique par l'intermédiaire de signaux de commande correspondants.

2. Installation téléphonique suivant la revendication 1,
caractérisée par
des moyens (COT,COV) pour corriger des erreurs de transmission dans des signaux de contrôle et de commande.

3. Installation téléphonique suivant la revendication 1 ou 2,
caractérisée par
des moyens (COT,COV) pour le codage et le décodage de signaux de contrôle et de commande.
